# EUROPEAN PATENT SPECIFICATION

(11) **EP 3 860 852 B1**
(45) Date of publication and mention of the grant of the patent: **19.07.2023**
(21) Application number: 20870475.9
(22) Date of filing: 16.06.2020
(51) Int. Cl.: B32B 27/32, B32B 27/08, B32B 7/12, B65D 65/40, C08J 5/18, B32B 1/08

(54) **BARRIER FILM AND IMPLEMENTATIONS THEREOF**
SPERRFOLIE UND IMPLEMENTIERUNGEN DAVON
FILM BARRIÈRE ET MISES EN OEUVRE DE CELUI-CI

(30) Priority: 13.12.2019 IN 201921051881
(43) Date of publication of application: 11.08.2021
(73) Proprietor: Nair, Hariharan Krishnan, Mumbai 400067 (IN)
(72) Inventor: POZHAL VENGU, Gurunath, Bangalore 560048 (IN); NAIR, Hariharan Krishnan, Mumbai 400067 (IN)
(74) Representative: Regimbeau
(86) International application number: PCT/IN2020/050530
(87) International publication number: WO 2021/117052

(56) References cited:
- EP-A1- 3 446 870
- WO-A1-00/16977
- WO-A1-94/23941
- WO-A2-02/060625
- WO-A2-02/072347
- US-A1- 2002 155 308
- US-A1- 2012 100 356
- US-A1- 2014 199 505
- US-B2- 6 720 046
- US-B2- 9 662 863

## Description

### TECHNICAL FIELD OF THE INVENTION

The present invention relates to a barrier film for packaging comprising multilayers. It also relates to a process of manufacturing such a multilayer barrier film, a laminate comprising the barrier film, and a process of preparing the laminate. It further relates to an article comprising the barrier film or the laminate. Furthermore, the present invention relates to the use of the barrier film or the laminate in an article/packaging material.

### BACKGROUND OF THE INVENTION

Packaging is an essential part of a product in today's developing world. Barrier property of packaging material is one of the critical properties for achieving product stability. Typically, various materials like aluminium, nylon, ethylene vinyl alcohol (EVOH), polyvinyl alcohol (PVOH), polyethylene terephthalate (PET), aluminium oxide, silicon oxide, etc. are used as barrier layers in food packaging applications.

The multilayer packaging films often comprise an oxygen barrier layer, which is typically a core layer positioned between at least two other layers. EVOH is among the preferable barrier material because of its low oxygen permeability, effective barrier to odors, fragrances, solvents, and oils and is therefore used as a component in the barrier film to improve its barrier properties. The barrier properties of EVOH depend on various parameters like the percentage of ethylene, actual thickness of the barrier layer, relative humidity etc.

EVOH exhibits very good barrier properties to oxygen. Additionally, to improve the processability while maintaining desirable levels of oxygen barrier properties, EVOH barrier layers can be placed in contact with additional layers of polyamides.

Multilayer films comprising one or more polyamide layers in contact with an EVOH barrier layer can provide improved impact resistance, flex crack resistance, or drawability to the multilayer film. For example, US 6,068,933 and US6,562,476 disclose multilayer films comprising two nylon layers in contact with an EVOH barrier layer. Multilayer films can comprise a polyester layer in addition to a polyamide layer. For example, US 6,699,549 discloses multilayer structures comprising a polyester layer and a polyamide layer. However, the barrier properties, such as Oxygen Transmission Rate (OTR) values achieved by such kinds of a structure is generally greater than 0.2 cm³/m²/ 1 day/1 atm. EP3446870 discloses a multilayer structure. It is, therefore, the object of the present disclosure to provide barrier films with enhanced barrier efficiency.

### SUMMARY OF THE INVENTION

In an aspect of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 25 µm.

In another aspect of the present disclosure, there is provided a process of preparing the multilayer barrier film comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 25 µm, wherein the film is prepared by a process selected from blown film process, cast film process, or lamination process of blown or cast films.

In yet another aspect of the present disclosure, there is provided a laminate comprising: (a) at least one print layer **(X);** (b) the multilayer barrier film **(F)** comprising: (i) at least one polyolefin core layer **(A);** (ii) at least one barrier layer **(B)** on both the sides of the core layer; and (iii) at least one polyolefin layer **(C)** adjacent to the at least one barrier layer, wherein the at least one barrier layer individually has a thickness in the range of 1 µm - 25 µm; and (c) at least one sealant layer **(Y).**

In a further aspect of the present disclosure, there is provided a process of preparing the laminate comprising: (a) at least one print layer **(X);** (b) the multilayer barrier film **(F)** comprising: (i) at least one polyolefin core layer **(A);** (ii) at least one barrier layer **(B)** on both the sides of the core layer; and (iii) at least one polyolefin layer **(C)** adjacent to the at least one barrier layer, wherein the at least one barrier layer individually has a thickness in the range of 1 µm - 25 µm; and (c) at least one sealant layer **(Y),** the process comprising laminating the layer and the barrier film by adhesive lamination or extrusion lamination.

In another aspect of the present disclosure, there is provided an article comprising the multilayer barrier film of the present disclosure or the laminate of the present disclosure.

In yet another aspect of the present disclosure, there is provided a use of the multilayer barrier film of the present disclosure or the laminate of the present disclosure for packaging material.

These and other features, aspects and advantages of the present subject matter will be better understood with reference to the following description and appended claims. This summary is provided to introduce a selection of concepts in a simplified form.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.
Figure 1 illustrates a cross-section of a multilayer barrier film (F; 100), according to an implementation of the present disclosure.
Figure 2 illustrates a cross-section of multilayer barrier film (F; 200) comprising tie layers, according to an implementation of the present disclosure.
Figure 3 illustrates a cross-section of a laminate (300) comprising multilayer barrier film (100), according to an implementation of the present disclosure.
Figure 4 illustrates a cross-section of laminate (400) comprising multilayer barrier film (200) having the tie layers, according to an implementation of the present disclosure.

### DETAILED DESCRIPTION

### Definitions

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. Throughout this specification, unless the context requires otherwise the word "comprise", and variations, such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

The phrase "at least one polyolefin core layer (A)" refers to any polyethylene selected from the group consisting of high density polyethylene, medium density polyethylene, low density polyethylene, linear low density polyethylene.

The phrase "at least one polyolefin layer (C)" refers to any polyethylene selected from the group consisting of high density polyethylene, medium density polyethylene, low density polyethylene, linear low density polyethylene, polypropylene, propylene copolymers, ethylene copolymers, polymethyl pentene and combinations thereof.

The phrase "high density polyethylene" as used herein refers to polyethylene having a density usually in the range of from about 0.94 g/cm³ to about 0.97 g/cm³. The term HDPE and high density polyethylene may be interchangeably used. The melt flow index may be in the range of 0.2 to 8 g/10min, more specifically in the range of 0.2 to 2.0 g/10 min.

The phrase "medium density polyethylene" as used herein refers to polyethylene having a density usually in the range of from about 0.926 g/cm³ to about 0.941 g/cm³. The term MDPE and medium density polyethylene may be interchangeably used.

The phrase "low density polyethylene" as used herein refers to polyethylene having a density usually in the range of from about 0.910 g/cm³to about 0.925 g/cm³. The term LDPE and low density polyethylene may be interchangeably used.

The phrase "linear low density polyethylene" as used herein refers to polyethylene having a density usually in the range of from about 0.910 g/cm³to about 0.930 g/cm³. The term LLDPE and linear low density polyethylene may be interchangeably used.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a thickness range of about 20 µm to about 200 µm should be interpreted to include not only the explicitly recited limits of about 30 µm to about 180 µm, but also to include sub-ranges, such as 65 µm to 175 µm, 70 µm to 160 µm, and so forth, as well as individual amounts, including fractional amounts, within the specified ranges, such as 65.2 µm, 140.6 µm, and 161.3 µm, for example.

As discussed above, barrier film(s) with enhanced barrier properties is the need of the hour. Therefore, to address the need, the present disclosure provides multilayer barrier film which helps in increasing the barrier properties of the film using the same or lesser thickness of the at least one barrier layer. The structure of the multilayer barrier film is such that even with reduced thickness of the barrier layer, the barrier properties are surprisingly enhanced, i.e., replacing a single barrier layer of certain thickness with two barrier layers separated by a polyolefin core layer results in a film with enhanced barrier properties. Enhanced barrier properties herein refer to reduction of OTR at least 2-15 times.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 25 µm. In an embodiment of the present disclosure, there is provided a multilayer barrier film as described herein, wherein the film with respect to the core layer can be symmetrical or asymmetrical in-terms of layers.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 20 µm.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 2 µm - 20 µm.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 3 µm - 20 µm.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 5 µm - 18 µm.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 5 µm - 16 µm.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 5 µm - 15 µm.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 25 µm, further comprises at least one tie layer **(D).** In another embodiment of the present disclosure, the at least one tie layer **(D)** is present in between the at least one polyolefin core layer **(A)** and the at least one barrier layer **(B).** In yet another embodiment of the present disclosure, the at least one tie layer **(D)** is present in between the at least one barrier layer **(B)** and the at least one polyolefin layer **(C).** In a further embodiment of the present disclosure, the at least one tie layer is present between, the at least one polyolefin core layer **(A)** and the at least one barrier layer **(B)** and between the at least one barrier layer **(B)** and the at least one polyolefin layer **(C).** In yet another embodiment of the present disclosure, the at least one polyolefin core layer **(A)** and the at least one barrier layer **(B)** have to be connected via the at least one tie layer **(D).** The tie layer is therefore provided between the at least one barrier layer **(B)** and the at least one polyolefin core layer **(A).** The tie layer **(D)** ensures that the barrier layer **(B)** and polyolefin core layer **(A)** are sufficiently tightly connected to each other that both layers **(B)** and **(A)** can be jointly drawn and the mutual adhesion is preserved. In a further embodiment of the present disclosure, the at least one barrier layer **(B)** and the at least one polyolefin layer **(C)** have to be connected via the at least one tie layer **(D).** The tie layer is therefore provided between the at least one barrier layer **(B)** and the at least one polyolefin layer **(C).** The tie layer **(D)** ensures that the barrier layer **(B)** and polyolefin layer **(C)** are sufficiently tightly connected to each other that both layers **(B)** and **(C)** can be jointly drawn and the mutual adhesion is preserved. The at least one tie **(D)** layer is a layer based on modified polyolefins. The modified polyolefins are based on ethylene polymers or propylene polymers. The modified polyolefins may be selected from the group consisting of maleated polyethylene, ethylene-acrylic acid copolymer, ethylene-meth acrylic acid copolymer, anhydride grafted ethylene/1-butene copolymer, anhydride grafted ethylene/1-hexene copolymer, polypropylene, propylene ethylene copolymer, ethylene vinyl acetate copolymer, ethylene methyl acrylate copolymer, and anhydride grafted ethylene/1-octene copolymer.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 20 µm, and further comprises at least one tie layer **(D).** In another embodiment of the present disclosure, the at least one tie layer **(D)** is present in between the at least one polyolefin core layer **(A)** and the at least one barrier layer **(B).** In yet another embodiment of the present disclosure, the at least one tie layer **(D)** is present in between the at least one barrier layer **(B)** and the at least one polyolefin layer **(C).** In a further embodiment of the present disclosure, the at least one tie layer **(D)** is present between, the at least one polyolefin core layer **(A)** and the at least one barrier layer **(B)** and between the at least one barrier layer **(B)** and the at least one polyolefin layer **(C).**

In an embodiment of the present disclosure, there is provided a multilayer barrier film **(F)** as described herein further comprises at least one tie layer **(D),** wherein the at least one tie layer comprises a polymeric adhesive selected from the group consisting of maleated polyethylene, ethylene-acrylic acid copolymer, ethylene-meth acrylic acid copolymer, anhydride grafted ethylene/1-butene copolymer, anhydride grafted ethylene/1-hexene copolymer, polypropylene, propylene ethylene copolymer, ethylene vinyl acetate copolymer, ethylene methyl acrylate copolymer, and anhydride grafted ethylene/1-octene copolymer.

In an embodiment of the present disclosure, there is provided a multilayer barrier film **(F)** as described herein further comprises at least one tie layer **(D)** and the at least one tie layer **(D)** has a thickness in the range of 2 µm - 40 µm. In another embodiment of the present disclosure, the at least one tie layer **(D)** has a thickness in the range of 5 µm - 40 µm. In yet another embodiment of the present disclosure, the at least one tie layer **(D)** has a thickness in the range of 5 µm - 35 µm. In a further embodiment of the present disclosure, the at least one tie layer **(D)** has a thickness in the range of 5 µm - 30 µm. In an alternate embodiment of the present disclosure, the at least one tie layer **(D)** has a thickness in the range of 10 µm - 30 µm.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer **(B)** individually has a thickness in the range of 1 µm - 25 µm, and wherein the at least one polyolefin core layer is multilayer. In another embodiment of the present disclosure, the at least one polyolefin core layer **(C)** is a two-layered structure. In yet another embodiment of the present disclosure, the at least one polyolefin core layer **(C)** is a three-layered structure. In a further embodiment of the present disclosure, when the at least one polyolefin core layer **(C)** is a two-layered structure or three-layered structure, the two layers or three layers may be joined by a tie polyethylene layer.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 20 µm, and wherein the at least one polyolefin core layer is multilayer. In another embodiment of the present disclosure, the at least one polyolefin core layer **(C)** is a two-layered structure. In yet another embodiment of the present disclosure, the at least one polyolefin core layer **(C)** is a three-layered structure. In a further embodiment of the present disclosure, when the at least one polyolefin core layer **(C)** is a two-layered structure or three-layered structure, the two layers or three layers may be joined by a tie polyethylene layer.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 25 µm, and wherein the at least one polyolefin core layer **(A)** comprises at least one polymer having a density in the range of 0.833 g/cm³ - 0.99 g/cm³. In another embodiment of the present disclosure, the polymer has a density in the range of 0.855 g/cm³ - 0.98 g/cm³. In yet another embodiment of the present disclosure, the polymer has a density in the range of 0.93 gm/cm³ - 0.96 g/cm³. In a further embodiment of the present disclosure, the polymer has a density in the range of 0.94 gm/cm³ - 0.96 g/cm³.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 20 µm, and wherein the at least one polyolefin core layer **(A)** comprises at least one polymer having a density in the range of 0. 0.833 gm/cm³ - 0.99 g/cm³. In another embodiment of the present disclosure, the polymer has a density in the range of 0.855 gm/cm³ - 0.98 g/cm³. In yet another embodiment of the present disclosure, the polymer has a density in the range of 0.93 gm/cm³ - 0.96 g/cm³. In a further embodiment of the present disclosure, the polymer has a density in the range of 0.94 gm/cm³ - 0.96 g/cm³.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has thickness in the range of 1 µm - 25 µm, and wherein the at least one polyolefin core layer **(A)** has a thickness in the range of 1 µm -100 µm. In an alternate embodiment of the present disclosure, the at least one polyolefin core layer **(A)** has a thickness in the range of 5 µm - 90 µm. In another embodiment of the present disclosure, the at least one polyolefin core layer **(A)** has a thickness in the range of 20 µm - 90 µm. In yet another embodiment of the present disclosure, the at least one polyolefin core layer **(A)** has a thickness in the range of 20 µm - 80 µm. In a further embodiment of the present disclosure, the at least one polyolefin core layer **(A)** has a thickness in the range of 20 µm - 60 µm.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 20 µm, and wherein the at least one polyolefin core layer **(A)** has a thickness in the range of 1 µm -100 µm. In an alternate embodiment of the present disclosure, the at least one polyolefin core layer **(A)** has a thickness in the range of 5 µm - 90 µm. In another embodiment of the present disclosure, the at least one polyolefin core layer **(A)** has a thickness in the range of 20 µm - 90 µm. In yet another embodiment of the present disclosure, the at least one polyolefin core layer **(A)** has a thickness in the range of 20 µm - 80 µm. In a further embodiment of the present disclosure, the at least one polyolefin core layer **(A)** has a thickness in the range of 20 µm - 60 µm.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 25 µm, and wherein the at least one polyolefin layer **(C)** comprises at least one polymer having a density in the range of 0.833 gm/cm³ - 0.99 g/cm³. In another embodiment of the present disclosure, the polymer has a density in the range of 0.855 gm/cm³ - 0.98 g/cm³. In yet another embodiment of the present disclosure, the polymer has a density in the range of 0.93 gm/cm³ - 0.96 g/cm³. In a further embodiment of the present disclosure, the polymer has a density in the range of 0.94 gm/cm³ - 0.96 g/cm³.

In an embodiment of the present disclosure, there is provided a multilayer barrier film **(F)** comprising: (a) at least one polyolefin core layer (A); (b) at least one barrier layer **(B)** on both the sides of the core layer; and (c) at least one polyolefin layer (C) adjacent to the at least one barrier layer, wherein the at least one barrier layer individually has a thickness in the range of 1 µm - 20 µm, and wherein the at least one polyolefin layer (C) comprises at least one polymer having a density in the range of 0.833 gm/cm³ - 0.99 g/cm³. In another embodiment of the present disclosure, the polymer has a density in the range of 0.855 gm/cm³ - 0.98 g/cm³. In yet another embodiment of the present disclosure, the polymer has a density in the range of 0.93 gm/cm³ - 0.96 g/cm³. In a further embodiment of the present disclosure, the polymer has a density in the range of 0.94 gm/cm³ - 0.96 g/cm³.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin **(C)** adjacent to the at least one barrier layer, wherein the at least one barrier layer individually has a thickness in the range of 1 µm - 25 µm, and wherein the at least one polyolefin layer **(C)** has a thickness in the range of 3 µm - 100 µm. In one another embodiment of the present disclosure, the at least one polyolefin layer **(C)** has a thickness in the range of 5 µm - 90 µm. In an alternate embodiment of the present disclosure, the at least one polyolefin layer **(C)** has a thickness in the range of 15 µm - 80 µm. In another embodiment of the present disclosure, the at least one polyolefin layer **(C)** has a thickness in the range of 15 µm - 70 µm. In yet another embodiment of the present disclosure, the at least one polyolefin layer **(C)** has a thickness in the range of 18 µm - 65 µm. In a further embodiment of the present disclosure, the at least one polyolefin layer **(C)** has a thickness in the range of 20 µm - 60 µm.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin **(C)** adjacent to the at least one barrier layer, wherein the at least one barrier layer **(B)** individually has a thickness in the range of 1 µm - 20 µm, and wherein the at least one polyolefin layer **(C)** has a thickness in the range of 3 µm - 100 µm. In one another embodiment of the present disclosure, the at least one polyolefin layer (C) has a thickness in the range of 5 µm - 90 µm. In an alternate embodiment of the present disclosure, the at least one polyolefin layer **(C)** has a thickness in the range of 15 µm - 80 µm. In another embodiment of the present disclosure, the at least one polyolefin layer **(C)** has a thickness in the range of 15 µm - 70 µm. In yet another embodiment of the present disclosure, the at least one polyolefin layer **(C)** has a thickness in the range of 18 µm - 65 µm. In a further embodiment of the present disclosure, the at least one polyolefin layer **(C)** has a thickness in the range of 20 µm - 60 µm.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 25 µm, and wherein the at least one polyolefin layer **(C)** is multilayer. In another embodiment of the present disclosure, the at least one polyolefin layer **(C)** is a two-layered structure. In yet another embodiment of the present disclosure, the at least one polyolefin layer **(C)** is a three-layered structure. In a further embodiment of the present disclosure, when the at least one polyolefin layer **(C)** is a two-layered structure or three-layered structure, the two layers or three layers may be joined by a tie polyethylene layer.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 20 µm, and wherein the at least one polyolefin layer **(C)** is multilayer. In another embodiment of the present disclosure, the at least one polyolefin layer **(C)** is a two-layered structure. In yet another embodiment of the present disclosure, the at least one polyolefin layer **(C)** is a three-layered structure. In a further embodiment of the present disclosure, when the at least one polyolefin layer **(C)** is a two-layered structure or three-layered structure, the two layers or three layers may be joined by a tie polyethylene layer.

According to the invention,in an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 25 µm, and wherein the at least one barrier layer comprises a member selected from the group consisting of ethylene vinyl alcohol, polyamide, polyethylene terephthalate or combinations thereof. Ethylene vinyl alcohol copolymer has an ethylene percentage ranging from 24-48 mol%

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 25 µm, and wherein the at least one barrier layer comprises a member selected from the group consisting of ethylene vinyl alcohol, polyvinyl alcohol, polyamide, polyethylene terephthalate or combinations thereof. In case the barrier layer is ethylene vinyl alcohol, the ethylene vinyl alcohol copolymer has an ethylene percentage ranging from 24-48 mol %.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 20 µm, and wherein the at least one barrier layer comprises a member selected from the group consisting of ethylene vinyl alcohol, polyamide, polyethylene terephthalate or combinations thereof. Ethylene vinyl alcohol copolymer has an ethylene percentage ranging from 24-48 mol %.

In an embodiment of the present disclosure, there is provided a multilayer barrier film **(F)** comprising: (a) at least one polyolefin core layer **(A);** (b) at least one barrier layer **(B)** on both the sides of the core layer; and (c) at least one polyolefin layer **(C)** adjacent to the at least one barrier layer, wherein the at least one barrier layer individually has a thickness in the range of 1 µm - 20 µm, and wherein the at least one barrier layer comprises a member selected from the group consisting of ethylene vinyl alcohol, polyvinyl alcohol, polyamide, polyethylene terephthalate or combinations thereof.

In an embodiment of the present disclosure, there is provided a multilayer barrier film as described herein, wherein the film has a thickness in the range of 20 µm -400 µm.

In an embodiment of the present disclosure, there is provided a multilayer barrier film as described herein, wherein the film has an OTR of equal to or less than 0.2 cm³/m²/ 1 day/1 atm, at a temperature in the range of 22 °C - 25 °C at relative humidity in the range of 0 - 90 % RH. In another embodiment of the present disclosure, there is provided a multilayer barrier film as described herein, wherein the film has an OTR in the range of 0.005 - 0.2 cm³/m²/ 1 day/1 atm, at a temperature in the range of 22 °C - 25 °C at relative humidity in the range of 0 - 90 % RH. In yet another embodiment of the present disclosure, there is provided a multilayer barrier film as described herein, wherein the film has an OTR in the range of 0.005 - 0.05 cm³/m²/ 1 day/1 atm, at a temperature in the range of 22 °C- 25 °C at relative humidity in the range of 0 - 90 % RH. In a further embodiment of the present disclosure, there is provided a multilayer barrier film as described herein, wherein the film has an OTR in the range of 0.005 - 0.02 cm³/m²/ 1 day/1 atm, at a temperature in the range of 22 °C- 25 °C at relative humidity in the range of 0 - 90 % RH. In an alternate embodiment of the present disclosure, there is provided a multilayer barrier film as described herein, wherein the film has an OTR of (less than 0.05) < 0.05 cm³/m²/ 1 day/1 atm, at a temperature in the range of 22 °C- 25 °C at relative humidity in the range of 0 -90 % RH.

In an embodiment of the present disclosure, there is provided a process of preparing the multilayer barrier film as described herein, wherein the film is prepared by a process selected from blown film process, cast film process, or lamination process of blown or cast films.

In an embodiment of the present disclosure, there is provided a process of preparing the multilayer barrier film as described herein, wherein the film is prepared by a blown film process in which the individual layers can be coextruded.

In an embodiment of the present disclosure, there is provided a process of preparing the multilayer barrier film as described herein, wherein the film is prepared by a cast film process.

In an embodiment of the present disclosure, there is provided a process of preparing the multilayer barrier film as described herein, wherein the film is prepared by lamination process of blown films.

In an embodiment of the present disclosure, there is provided a process of preparing the multilayer barrier film as described herein, wherein the film is prepared by lamination process of cast films.

In an embodiment of the present disclosure, there is provided a laminate comprising: (a) at least one print layer **(X);** (b) the multilayer barrier film **(F)** as described herein; and (c) at least one sealant layer **(Y).**

In an embodiment of the present disclosure, there is provided a laminate comprising: (a) at least one print layer **(X);** (b) the multilayer barrier film as described herein; and (c) at least one sealant layer **(Y),** wherein the at least one print layer comprises a polymer selected from high density polyethylene, medium density polyethylene, low density polyethylene, linear low-density polyethylene, and combinations thereof.

In embodiment of the present disclosure, there is provided a laminate comprising: (a) at least one print layer **(X);** (b) the multilayer barrier film as described herein; and (c) at least one sealant layer **(Y),** wherein the at least one print layer is a single layer or multilayer structure. In another embodiment of the present disclosure, the at least one print layer **(X)is** a two-layered structure. In yet another embodiment of the present disclosure, the at least one print layer **(X)** is a three-layered structure. In a further embodiment of the present disclosure, when the at least one print layer **(X)** is a two-layered structure or three-layered structure, the two layers or three layers may be joined by a tie polyethylene layer.

In an embodiment of the present disclosure, there is provided a laminate comprising: (a) at least one print layer **(X);** (b) the multilayer barrier film as described herein; and (c) at least one sealant layer **(Y),** wherein the at least one sealant layer **(Y)** comprises a polymer selected from high density polyethylene, medium density polyethylene, low density polyethylene, linear low-density polyethylene, linear low density polyethylene, and combinations thereof.

In an embodiment of the present disclosure, there is provided a laminate comprising: (a) at least one print layer **(X);** (b) the multilayer barrier film as described herein; and (c) at least one sealant layer **(Y),** wherein the at least one sealant layer **(Y)** is a single layer or multilayer structure. In another embodiment of the present disclosure, the at least one sealant layer **(Y)** is a two-layered structure. In yet another embodiment of the present disclosure, the at least one sealant layer **(Y)** is a three-layered structure. In a further embodiment of the present disclosure, when the at least one sealant layer **(Y)** is a two-layered structure or three-layered structure, the two layers or three layers may be joined by a tie polyethylene layer.

In an embodiment of the present disclosure, there is provided a laminate comprising: (a) at least one print layer **(X);** (b) the multilayer barrier film as described herein; and (c) at least one sealant layer **(Y),** wherein the at least one print layer has a thickness in the range of 50 µm - 200 µm.

In an embodiment of the present disclosure, there is provided a laminate comprising: (a) at least one print layer **(X);** (b) the multilayer barrier film as described herein; and (c) at least one sealant layer **(Y),** wherein the at least one sealant layer has a thickness in the range of 50 µm - 200 µm.

In an embodiment of the present disclosure, there is provided a laminate comprising: (a) at least one print layer **(X);** (b) the multilayer barrier film (F) as described herein; and (c) at least one sealant layer **(Y),** wherein the laminate reduces the OTR by at least 2 times in comparison to single barrier layer of about similar thickness.

In an embodiment of the present disclosure, there is provided a laminate comprising: (a) at least one print layer **(X);** (b) the multilayer barrier film (F) as described herein; and (c) at least one sealant layer **(Y),** wherein the laminate reduces the OTR by at least 5 times in comparison to single barrier layer of about similar thickness.

In an embodiment of the present disclosure, there is provided a laminate comprising: (a) at least one print layer **(X);** (b) the multilayer barrier film (F) as described herein; and (c) at least one sealant layer **(Y),** wherein the laminate reduces the OTR by at least 7 times in comparison to single barrier layer of about similar thickness.

In an embodiment of the present disclosure, there is provided a laminate comprising: (a) at least one print layer **(X);** (b) the multilayer barrier film (F) as described herein; and (c) at least one sealant layer **(Y),** wherein the laminate reduces the OTR by at least 10 times in comparison to single barrier layer of about similar thickness.

In an embodiment of the present disclosure, there is provided a laminate comprising: (a) at least one print layer **(X);** (b) the multilayer barrier film (F) as described herein; and (c) at least one sealant layer **(Y),** wherein the laminate reduces the OTR by at least 5-10 times in comparison to single barrier layer of about similar thickness.

In an embodiment of the present disclosure, there is provided a laminate as described herein, wherein the laminate has an OTR of equal to or less than 0.2 cm³/m²/ 1 day/1 atm, at a temperature in the range of 22 °C - 25 °C at relative humidity in the range of 0 - 90 % RH. In another embodiment of the present disclosure, there is provided a laminate as described herein, wherein the laminate has an OTR in the range of 0.005 - 0.2 cm³/m²/ 1 day/1 atm, at a temperature in the range of 22 °C - 25 °C at relative humidity in the range of 0 - 90 % RH. In yet another embodiment of the present disclosure, there is provided a laminate as described herein, wherein the laminate has an OTR in the range of 0.005 - 0.05 cm³/m²/ 1 day/1 atm, at a temperature in the range of 22 °C- 25 °C at relative humidity in the range of 0 - 90 % RH. In a further embodiment of the present disclosure, there is provided a laminate as described herein, wherein the laminate has an OTR in the range of 0.005 - 0.02 cm³/m²/ 1 day/1 atm, at a temperature in the range of 22 °C- 25 °C at relative humidity in the range of 0 - 90 % RH. In an alternate embodiment of the present disclosure, there is provided a laminate as described herein, wherein the laminate has an OTR of (less than 0.05) < 0.05 cm³/m²/ 1 day/1 atm, at a temperature in the range of 22 °C- 25 °C at relative humidity in the range of 0 -90 % RH.

In an embodiment of the present disclosure, there is provided a process of preparing the laminate as described herein, the process comprising laminating the layer by extrusion lamination or adhesion lamination.

In an embodiment of the present disclosure, there is provided a process of preparing the laminate as described herein, the process comprising laminating the layer by adhesive lamination.

In an embodiment of the present disclosure, there is provided a process of preparing the laminate as described herein, the process comprising laminating the layer by extrusion lamination.

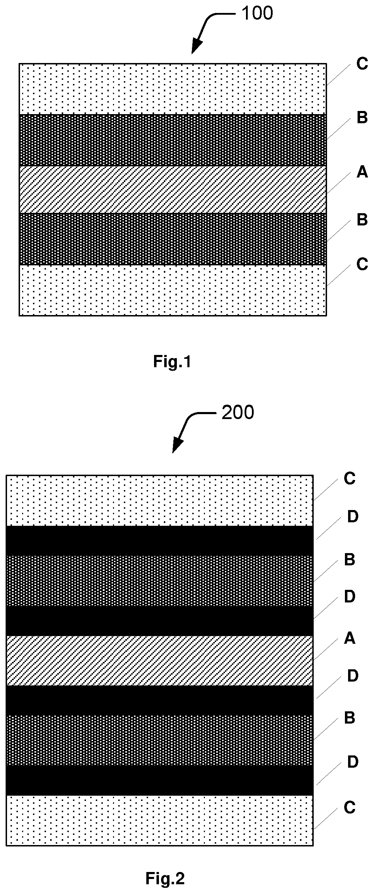

In an example, the multilayer film is as represented in Figure 1. The cross-section of the multilayer film 100 from comprises a polyolefin core layer **(A);** a barrier layer **(B)** on both the sides of the core layer (A) and a polyolefin layer **(C)** adjacent to both the barrier layer. The barrier layer (B) individually may have a thickness of 6 µm each. In an example, the barrier layer may be of a thickness of 6 µm and 3 µm individually. In another example, the barrier layer may be of a thickness of 3 µm and 10 µm individually. The barrier layer may be selected from EVAL^{™}, SoarnoL^{™}, or Evasin^{®}. The polyolefin core layer (A) comprises a polymer having density in the range of 0.833 gm/cm³ - 0.99 g/cm³. The polyolefin core layer may comprise polymer selected from high density polyethylene, medium density polyethylene, low density polyethylene, linear low-density polyethylene, or combinations thereof. The polyolefin core layer may have a thickness in the range of 1 µm -100 µm. In an example the polyolefin core layer may be of thickness 90 µm. In another example the polyolefin core layer may be of thickness 80 µm. In yet another example, the polyolefin core layer may have a thickness of 60 µm. In a further example, the polyolefin core layer may have a thickness of 62 µm.

As shown in Figure 1 the polyolefin layer (C) is present adjacent to the barrier layer **(B).** The polyolefin layer may be single layer or a multilayer structure. In an example, the polyolefin layer may be a two layer structure. In another example, the polyolefin layer may be a three layer structure. The polyolefin layer comprises a polymer having a density in the range of 0.920 gm/cm³ - 0.990 g/cm³. The polymer in the polyolefin layer may be selected from high density polyethylene, medium density polyethylene, low density polyethylene, linear low-density polyethylene, or combinations thereof. The polyolefin layer may have a thickness in the range of 3 µm -100 µm. In an example the polyolefin layer may be of thickness 30 µm. In another example the polyolefin layer may be of thickness 32 µm. In yet another example, the polyolefin layer may have a thickness of 15 µm. In a further example, the polyolefin layer may have a thickness of 85 µm.

Figure 2 differs from Figure 1 only in that the multilayer barrier film 200 further comprises at least the tie layer (D). In an example, the multilayer barrier film comprising at least one tie layer (200) is represented in Figure 2. The multilayer barrier film as shown in Figure 2 further comprises at least one tie layer (D) to form the multilayer barrier film. In an example, one or more tie layer(s) may be disposed between the at least one polyolefin core layer and at least one barrier layer. In another example, the tie layer may be present between the at least one barrier layer and the at least one polyolefin layer. In yet another example, the tie layer is chosen to maximize compatibility within the layer(s) and to maximize adhesion between the layer(s). In a further example, if the barrier layer is EVOH layer a tie layer comprising a maleated polyethylene or maleic anhydride grafted polymer may be present between the at least one barrier layer and the at least one polyolefin layer. In an alternate example, if the barrier layer is EVOH layer a tie layer comprising a maleated polyethylene or maleic anhydride grafted polymer may be present between the at least one barrier layer and the at least one polyolefin core layer. The tie layer may have a thickness in the range of 2 µm - 40 µm. In an example, the tie layer may have a thickness of 5µm. In another example the tie layer may have a thickness of 8 µm.

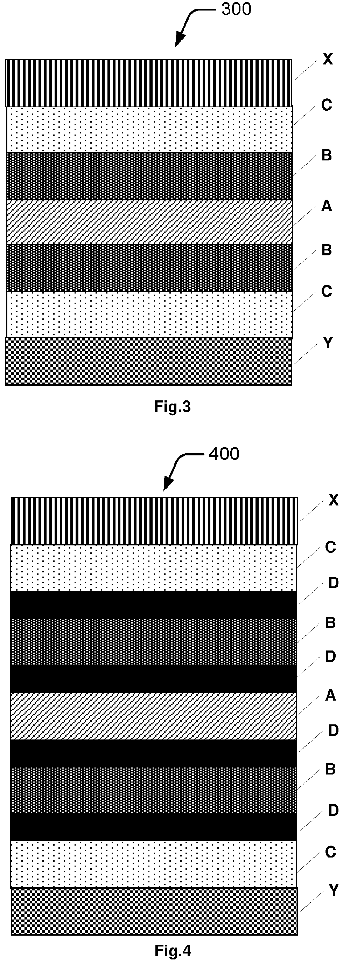

Figure 3 illustrates the laminate (300) of the present disclosure, wherein the multilayer barrier film of the Figure 1 is used to prepare the laminate. As can be seen from Figure 3 the laminate comprises at least one print layer **(X),** and at least one sealant layer **(Y).** In an example, the at least one print layer may be a single layer or multiple layer. In an example the print layer is a two-layer structure or a three-layer structure. The print layer comprises polymer selected from high density polyethylene, medium density polyethylene, low density polyethylene, linear low-density polyethylene, and combinations thereof. In an example, the print layer may have a thickness in the range of 50 µm - 200 µm. In another example, the print layer has a thickness of 80 µm.

In an example the at least one sealant layer **(Y)** may be absent. In another example, the at least one sealant layer may be present and may be a single layer or multiple layer. In an example the sealant layer is a two-layer structure or a three-layer structure. The sealant layer comprises polymer selected from high density polyethylene, medium density polyethylene, low density polyethylene, linear low-density polyethylene, and combinations thereof. In an example, the sealant layer may have a thickness in the range of 50 µm - 200 µm. In another example, the sealant layer has a thickness of 50 µm.

In an example, the laminate may comprise at least one print layer and at least one barrier film. In such a laminate the sealant layer is absent. In another example, the laminate may comprise at least one print layer (**X**)/at least one barrier film **(F)**/at least one sealant layer (**Y**).

Figure 4 depicts the laminate (400) of the present disclosure, wherein the laminate of Figure 3 further comprises at least one tie layer (D) to form the laminate 400. In an example, one or more tie layer(s) may be disposed between the at least one polyolefin core layer and at least one barrier layer. In another example, the tie layer may be present between the at least one barrier layer and the at least one polyolefin layer. In yet another example, the tie layer is chosen to maximize compatibility within the layer(s) and to maximize adhesion between the layer(s). In a further example, if the barrier layer is EVOH layer a tie layer comprising a maleated polyethylene or maleic anhydride grafted polymer may be present between the at least one barrier layer and the at least one polyolefin layer. In an alternate example, if the barrier layer is EVOH layer a tie layer comprising a maleated polyethylene or maleic anhydride grafted polymer may be present between the at least one barrier layer and the at least one polyolefin core layer. The tie layer may have a thickness in the range of 2 µm - 40 µm. In an example, the tie layer may have a thickness of 5µm. In another example the tie layer may have a thickness of 8 µm.

As can be seen from Figure 4 the laminate comprises at least one print layer **(X),** and at least one sealant layer **(Y).** In an example, the at least one print layer may be a single layer or multiple layer. The print layer comprises polymer selected from high density polyethylene, medium density polyethylene, low density polyethylene, linear low-density polyethylene, and combinations thereof. In an example, the print layer may have a thickness in the range of 50 µm - 200 µm. In another example, the print layer has a thickness of 80 µm.

In an example, the at least one sealant layer may be a single layer or multiple layer. The sealant layer comprises a polymer selected from high density polyethylene, medium density polyethylene, low density polyethylene, linear low-density polyethylene, and combinations thereof. In an example, the sealant layer may have a thickness in the range of 50 µm - 200 µm. In another example, the sealant layer has a thickness of 50 µm.

In an embodiment of the present disclosure, there is provided an article comprising the multilayer barrier film of the present disclosure.

In an embodiment of the present disclosure, there is provided an article comprising the laminate of the present disclosure.

In an embodiment of the present disclosure, there is provided a use of the multilayer barrier film of the present disclosure for a packaging material. The multilayer barrier film may be used in making the inner barrier liners (IBL), shoulder barrier liners (SBL), lami-tube, or a packaging material. The barrier film of the present disclosure may be used as an inner barrier liner (IBL) in a packaging material or the shoulder barrier liner (SBL) of packaging material or the sleeve of a packaging material or Top seal of a packaging material. The IBL/SBL/Top seal works as an effective moisture and oxygen barrier for packaging products which are environmentally sensitive. The packaging material may be a lami-tube.

In an embodiment of the present disclosure, there is provided a use of the laminate of the present disclosure for a packaging material. In another embodiment of the present disclosure, the packaging material may be lami-tube.

Although the subject matter has been described in considerable detail with reference to certain examples and implementations thereof, other implementations are possible.

### Examples

The disclosure will now be illustrated with working examples, which is intended to illustrate the working of disclosure . Unless defined otherwise, all technical and scientific terms used herein have the same meaning as commonly understood to one of ordinary skill in the art to which this disclosure belongs. Although methods and materials similar or equivalent to those described herein can be used in the practice of the disclosed methods and compositions, the exemplary methods, devices and materials are described herein. It is to be understood that this disclosure is not limited to particular methods, and experimental conditions described, as such methods and conditions may apply.

### Abbreviations:

MA-grafted tie layer: maleic anhydride grafted tie layer
EVOH: ethylene vinyl alcohol, wherein the ethylene content is 24-48 mol%.

### EXAMPLE 1

### Process for preparing a multilayer barrier film and a laminate of the present disclosure.

The multilayer barrier film of the present disclosure is prepared by blown film extrusion, wherein all the layers are prepared by blown film extrusion and then are extrusion laminated to form the multilayer barrier film. The process of film extrusion is a well-known process as discussed in the references [H.F. Guiles Jr., J.R. Wagner Jr., E.M. Mount III, Extrusion The definitive processing guide and handbook, William Andrew Inc, Norwich, NY, (2005), 453-463; and T.I. Butler, G.E. Ealer, S.B. Marks, G.D. Oliver, J. Perdikoulias. (eds) Film extrusion manual, 2nd edn. TAPPI (2005)].

The multilayer barrier film of the present disclosure can also be made by a cast film process well known in the art. More detailed information regarding the cast film process can be extracted from the following references: H.F. Guiles Jr., J.R. Wagner Jr., E.M. Mount,. III, Extrusion The definitive processing guide and handbook, William Andrew Inc, Norwich, NY, (2005), 301-306; T.I. Butler, G.E. Ealer, S.B. Marks, G.D. Oliver, J. Perdikoulias. (eds) Film extrusion manual, 2nd edn. TAPPI (2005); J. Vlachopoulos, J.R. Wagner,. Jr., The SPE guide on extrusion technology and troubleshooting, Society of Plastics Engineers, Brookfield, CT, (2001); and A.R. Calhoun, J.R. Wagner,. Jr., Extrusion processes, Plastics technician's toolbox, book 6, Society of Plastics Engineers, Brookfield, CT, (2004).

For the preparation of Film 1, firstly, a 5-layered barrier film (25µm (polyolefin layer; 80%HDPE+20%LDPE) / 5 µm maleated-PE (tie layer)/ 6µm EVOH (barrier layer)/ 5 µm maleated-PE (tie layer)/ 30 µm PE (polyolefin core layer) was produced by using a co-extruded blown film and was taken from the first unwinding station to the extrusion station. Secondly, an another Film 1 of 5-layer film (30 µm (polyolefin core layer; 58 % HDPE + 42 % LDPE) / 5 µm maleated-PE (tie layer)/ 6µm EVOH (barrier layer)/ 5 µm maleated-PE (tie layer) / 25µm (polyolefin layer; 80 % HDPE + 20 %LDPE)) was produced by using a co-extruded blown film and was taken from the second unwinding station to the extrusion lamination station to bond together utilizing a 20 µm PE (LDPE/LLDPE melt) to make a multilayer barrier film having staggered barrier layer of 6 µm and 6 µm separated by a 80 µm polyolefin core layer. The manufacturing process in this invention uses general available machines such as a co-extruded blown film manufacturing line, a co-extrusion lamination line.

Using the process as described above, Film 2, Film 3, Film 4, Film 5 were prepared, wherein the structure/layering of the films are as described in the Table 3.

Various kinds of multilayer barrier films are possible and may be prepared as per the process described above. In an example the multilayer barrier film of present disclosure may have structure as explained below. The structures may be created with various polyolefin layer blends. The polyolefin layer may be a single layer in some examples and may be a multilayer structure in another example. In case of a multilayer structure the polyolefin layer may comprise barrier layer also. The barrier layer may be selected from EVOH or polyamide as per requirement. The PE of the polyolefin layer may be a blend of polyethylenes selected from high density polyethylene, medium density polyethylene, low density polyethylene, linear low-density polyethylene, and combinations thereof.

**Table 1: Multilayer barrier film**

| S.No | Polyolefin layer | Barrier layer | Polyolefi n core layer | Barrier layer | Polyolefin layer |
|---|---|---|---|---|---|
| 1 | PE | EVOH | PE | EVOH | PE |
| 2 | PE | EVOH | PE | EVOH | PE//EVOH//PE |
| 3. | PE | polyamide | PE | polyamide | PE |
| 4. | PE | polyamide | PE | EVOH | PE |
| 5. | PE | EVOH | PE | polyamide | PE |
| 6. | PE | polyamide | PE | Polyamide | PE//polyamide//PE |
| 7. | PE | polyamide | PE | EVOH | PE//polyamide//PE |
| 8. | PE//EVOH //PE | polyamide | PE | polyamide | PE |
| 9. | PE | polyamide | PE | Polyamide | PE//EVOH//PE |
| 10. | PE/PE | EVOH | PE | EVOH | PE//EVOH//PE/PE |
| 11. | PE/PE | EVOH | PE | EVOH | PE/PE |
| 12. | PE/PE | polyamide | PE | polyamide | PE/PE |
| 13. | PE/PE | polyamide | PE | EVOH | PE/PE |
| 14. | PE/PE | EVOH | PE | polyamide | PE/PE |
| 15. | PE/PE | polyamide | PE | Polyamide | PE//polyamide//PE/ PE |
| 16. | PE/PE | polyamide | PE | EVOH | PE//polyamide//PE/ PE |
| 17. | PE/PE | EVOH | PE | polyamide | PE//polyamide//PE/ PE |
| 18. | PE/PE | polyamide | PE | Polyamide | PE//EVOH//PE/PE |
| 19. | PE/PE/PE | EVOH | PE | EVOH | PE//EVOH//PE/PE/ |
| | | | | | PE |
| 20. | PE/PE/PE | EVOH | PE | EVOH | PE/PE/PE |
| 21. | PE/PE/PE | polyamide | PE | polyamide | PE/PE/PE |
| 22. | PE/PE/PE | polyamide | PE | EVOH | PE/PE/PE |
| 23. | PE/PE/PE | EVOH | PE | polyamide | PE/PE/PE |
| 24. | PE/PE/PE | polyamide | PE | Polyamide | PE//polyamide//PE/ PE/PE |
| 25. | PE/PE/PE | polyamide | PE | EVOH | PE//polyamide//PE/ PE/PE |
| 26. | PE/PE/PE | EVOH | PE | polyamide | PE//polyamide//PE/ PE/PE |
| 27. | PE/PE/PE | polyamide | PE | Polyamide | PE//EVOH//PE/PE/ PE |
| 28. | PE | EVOH | PE | Polyamide | PE//EVOH//PE |

In all the examples provided above the at least one barrier layer may be replaced by a polyester layer. Moreover, the polyolefin layer, barrier layer, and polyolefin core layer are connected via at least one tie layer D. The tie layer is provided between the various layers to ensure that the layers are sufficiently tightly connected to each other and that the connected layers can be jointly drawn and the mutual adhesion may be preserved. The adhesive layer is a layer based on modified polyolefins. The tie layer is a 5 µm maleated-PE.

### Process of preparing a laminate:

The multilayer barrier film made by blown film process or the cast film process as described above may be used to prepare a laminate, wherein the laminate includes at least one print layer (X), and optionally at least one sealant layer (Y). The process of preparing a laminate may be selected from either an adhesive lamination process or extrusion lamination process.

More details regarding the lamination process are present in Wolf R. "A technology decision-adhesive lamination or extrusion coating/lamination?" In: Tappi place Conference, April Albuquerque (NM); 2010. Viewed on 26th May 2020, from: https://imisrise.tappi.org/TAPPI/Products/10/PLA/10PLA57.aspx .

The process of preparation of the laminate of the present disclosure is the same as the process of preparation of film.

For the preparation of Laminate 1, firstly, a 5-layered barrier film ([25 µm (sealant layer; 80 % LLDPE + 20 % LDPE) / 5 µm maleated-PE (tie layer)/ 3µmEVOH(barrier layer) / 5 µm maleated-PE (at least one tie layer)/ 10µm PE (polyolefin core layer)] was produced by using a co-extruded blown film and was taken from the first unwinding station to the extrusion station. Secondly, an another Laminate 1 of 5-layer barrier film [35µm PE (polyolefin core layer) / 10 µm maleated-PE (tie layer)/ 10µmEVOH (barrier layer)/ 10 µm maleated-PE (tie layer)//35 µm (print layer: [15 µmPE (polyolefin layer) was produced by using a co-extruded blown film and was taken from the second unwinding station to the first extrusion lamination station to bond together utilizing a 20 µm PE (LDPE/LLDPE melt), this laminate was further laminated to 50 µm [80% LLDPE + 20 % LDPE] sealant utilizing 20 µm tie layer in second extrusion lamination to make final laminate of the present disclosure comprising the print layer (X) and the sealant layer (Y). The laminate can be made by utilizing single extrusion lamination or tandem extrusion lamination depending upon the final architecture.

For Laminate 2, the structure shown in the Table 4 was extrusion laminated using a similar process as per the structure of Laminate 1.

### EXAMPLE 2

### Barrier properties of the multilayer barrier film of the present disclosure

A series of tests were conducted on the various films prepared by the process as explained in Example 1. The test condition used for conduction the OTR test are in Table 2 below:

**Table 2**

| **Test Condition** | **For OTR testing** |
|---|---|
| Standard Used | ASTM D 3985-05 |
| Room Temp. | 22 +/- 2 °C |
| Test Temp. | 23 +/- 0.5 °C |
| Test RH | 0% +/- 3% RH |
| Carrier RH | 0% +/- 3% RH |
| Conditioning | 1 Hr |
| Test Area | 50 cm² |
| Machine Model | MOCON OTR 2/22-L |

The OTR results of various multilayer barrier films are recorded in Table 3. The purpose of these tests was to demonstrate that the OTR varies if a single barrier layer is used in the film in comparison to a film wherein the two barrier layers are used separated by a polyolefin core layer. The structure and design of the multilayer barrier film of the present disclosure provided enhanced barrier properties and the same was confirmed by the extremely low oxygen transmission rate (OTR) values.

Table 3 illustrates that when a single barrier layer was used in the multilayer barrier film an OTR value of 0.32 was attained (CF1). In contrast, if the single barrier layer was replaced by two barrier layers separated by a polyolefin core layer, such a multilayer barrier film (Film 1, Film 2, and Film 3) showed extremely low oxygen transmission rate (OTR) values, i.e., < 0.05. It can thus be inferred that the presence of the polyolefin core layer (Film 1, Film 2, Film 3) and having two barrier (EVOH) layers of similar thickness, resulted in the enhancement of barrier properties, i.e., unexpected low OTR values.

Similar inference can be drawn from the Film 4 and the comparative films CF2, CF3, and CF4. CF2, CF3, and CF4 individually had barrier layers of 15 µm, but when the single layer was replaced by two barrier layers separated by a polyolefin core layer, i.e., Film 4 a drastic reduction in the oxygen transmission rate was observed, thereby improving the barrier properties.

Analogous results were observed with Film 5 and Comparative Film 5. Comparative Film 5 showed an oxygen transmission rate value of 19, but when two barrier layers of 48 µm each were separated by polyolefin core layer substantial reduction in the oxygen transmission rate was observed, i.e, an OTR value of 2 was achieved at 0 % RH.

From the above explanation splitting the barrier layer into two layers creates structural and physical improvements in terms of barrier properties in the film and the laminate. For example, if a comparison is drawn between an individual EVOH layer and a EVOH layer that is split into two layers side by side separated by a polyethylene layer, the film/laminate produced have improved barrier properties.

**Table 3: Multilayer barrier films with OTR values**

| S.No. | Films | Barrier layer Variant | Structure | barrier layer thickness | OTR cc/m².day; @ 0% RH |
|---|---|---|---|---|---|
| 1. | Film 1 | EVAL^{™} | 25µm (polyolefin layer; 80%HDPE+20%LDPE) / 5 µm maleated-PE (tie layer)/ 6µm EVOH (barrier layer)/ 5 µm maleated-PE (tie layer) / **80 µm PE (polyolefin core layer)** / 5 µm maleated-PE (tie layer)/ 6µm EVOH (barrier layer)/ 5 µm | 6 µm + 6 µm | < 0.05 |
| | | | maleated-PE (tie layer) / 25µm (polyolefin layer; 80 % HDPE + 20 %LDPE) | | |
| 2. | Film 2 | EVAL^{™} | 25µm (polyolefin layer; 80%HDPE+20%LDPE) / 5 µm maleated-PE (tie layer)/ 6µm EVOH (barrier layer)/ 5 µm maleated-PE (tie layer)/ **60 µm PE (polyolefin core layer)** / 5 µm maleated-PE (tie layer) / 6µm EVOH (barrier layer)/ 5 µm maleated-PE (tie layer)/ 25µm (polyolefin layer; 80 % HDPE + 20 %LDPE) | 6 µm +6 µm | < 0.05 |
| 3. | CF1 | EVAL^{™} | 90µmPE // 12 µm EVOH // 50µmPE | 12 µm | 0.32 |
| 4. | Film 3 | EVAL^{™} | 25µm (polyolefin layer; 80%HDPE+20%LDPE) / 5 µm maleated-PE (tie layer)/ 6µm EVOH (barrier layer)/ 5 µm maleated-PE (tie layer)/ **55 µm PE (polyolefin core layer)** / 5 µm maleated-PE (tie layer)/ 3µmEVOH (barrier layer)/ 5 µm maleated-PE (tie layer)/ 10µm PE (polyolefin layer) | 6µm + 3 µm | < 0.05 |
| 5. | Film 4 | EVAL^{™}; Nylon-6 | 25 µm (80%HDPE+20%LDPE) / 5 µm maleated-PE / 5µmEVOH / 5µm polyamide / 5µmEVOH / 5 µm maleated-PE / **50µm (polyolefin core layer; 80%HDPE+20%LDPE)** / 5 µm maleated-PE / 5µmEVOH / 5µm polyamide / 5µmEVOH / 5 µm maleated-PE / 25µm(80%HDPE+20%LDPE ) | 15 µm+ 15 µm | 0.02 |
| 8. | CF2 | EVAL^{™}; Nylon-6 | 25 µm (80%HDPE+20%LDPE) / 5 µm maleated-PE / 5µmEVOH / 5µm polyamide / 5µmEVOH / 5 µm maleated-PE / 25µm(80%HDPE+20%LDPE ) | 15µm | 0.22 |
| 7. | CF3 | EVAL^{™} | 25 µm (80%HDPE+20%LDPE) / 5 µm maleated-PE // 15µmEVOH // 5 µm maleated-PE / 25µm(80%HDPE+20%LDPE | 15 µm | 0.22 |
| | | | ) | | |
| 6. | CF4 | EVAL^{™} | 20 µm (80%HDPE+20%LDPE) / 5 µm maleated-PE // 11µmEVOH // 5 µm maleated-PE / 10 µm (80%HDPE+20%LDPE) | 11 µm | 0.32 |
| 5. | Film 5 | Nylon-6 | 80µm PE (polyolefin layer; HDPE)/ 16µm modified PE (tie layer; maleated LLDPE)/24µm polyamide (barrier layer) /16µm modified PE(tie layer; maleated LLDPE) /24µm polyamide (barrier layer)// **80µm PE (polyolefin core layer; HDPE)** / 16µm modified PE (tie layer; maleated LLDPE)/24µm polyamide (barrier layer)/16µm modified PE(tie layer; maleated LLDPE)/ 24µm polyamide (barrier layer) | (24µm + 24µm) + (24µm + 24µm) | 2 |
| 9. | CF5 | Nylon-6 | 24µm polyamide/ 16µm modified PE/24µm polyamide/16µm modified PE (maleated LLDPE) / 80µm PE | 24µm + 24µm | 19 |

### EXAMPLE 3

### Barrier properties of the laminate of the present disclosure

Barrier effectiveness of the laminate of the present disclosure was also specifically OTR at 0% RH, in a similar manner as described for the multilayer barrier 5 film explained in Example 2. The test conditions were similar to the ones provided in Table 2.

**Table 4: Laminate of the present disclosure comprising print layer and optionally a sealant layer**

| S.No . | Laminate | Barrier | Structure | Barrier layer thickness | OTR cc/m².da y; @ 0% RH |
|---|---|---|---|---|---|
| 1. | Laminate 1 | EVAL^{™} | [25 µm (sealant layer; 80 % LLDPE + 20 % LDPE) / 5 µm maleated-PE (tie layer)/ 3µmEVOH(barrier layer) / 5 µm maleated-PE (at least one tie layer)/ 10µm PE (polyolefin core layer)] // 20 µmPE (polyolefin core layer)// [35µm PE (polyolefin core layer) / 10 µm maleated-PE (tie layer)/ 10µmEVOH (barrier layer)/ 10 µm maleated-PE (tie layer)//15 µmPE (polyolefin layer)] // 20 µm PE (polyolefin layer or tie layer)// 50 µm (; 80 % LLDPE + 20 %LDPE) | 3µm +10µm | < 0.05 |
| 2. | Laminate 2 | EVAL^{™}; Nylon-6 | 25 µm (print layer; 80%HDPE+20%LDPE) / 5 µm maleated-PE (tie layer)/ 5µmEVOH | 15µm+15µm | 0.02 |
| | | | (barrier layer)/ 5µm polyamide (barrier layer)/ 5µmEVOH (barrier layer)/ 5 µm maleated-PE (tie layer)/ 25µm( polyolefin core layer; 80%HDPE+20%LDPE) // 25 µm (polyolefin core layer; 80%HDPE+20%LDPE) / 5 µm maleated-PE (tie layer)/ 5µmEVOH (barrier layer)/ 5µm polyamide (barrier layer)/ 5µmEVOH (barrier layer)/ 5 µm maleated-PE (tie layer)/ 25µm(polyolefin layer; 80%HDPE+20%LDPE) | | |

From the above Table 4 it is discernible, that replacing a single barrier layer of certain thickness with two barrier layers separated by a polyolefin core layer results in a laminate with enhanced barrier properties, i. e, an OTR of 0.02 -0.05 cc/m².day at 0% RH. Reduction of approximately at least 2 - 15 times was observed in the OTR. The polyolefin core layer may be a single layer or multiple layers having thickness in the range of 1 µm - 100 µm. The constituents of the polyolefin core layer may be selected from the group consisting of high density polyethylene, low density polyethylene, linear low density polyethylene, polypropylene, polypropylene copolymers, and combinations thereof.

### Advantages of the present disclosure:

The multilayer barrier film and the laminate of the present disclosure provides enhanced barrier properties. The structure of the film and the laminate is such that an OTR in the range of 0.005 - 0.2 cm³/m²/ 1 day/1 atm, at a temperature in the range of 22 °C- 25 °C, at relative humidity in the range of 0 to 90% RH is achieved.

The design of the multilayer barrier film enhances economic value compared to commercial films and help in achieving multilayer film design with lesser film thickness yet higher barrier properties.

## Claims

1. A multilayer barrier film **(F)** comprising:
(a) at least one polyolefin core layer **(A)** selected from high density polyethylene, medium density polyethylene, low density polyethylene, and linear low density polyethylene;
(b) at least one barrier layer **(B)** comprising ethylene vinyl alcohol on both the sides of the core layer; and
(c) at least one polyolefin layer **(C)** adjacent to the at least one barrier layer,
wherein the at least one barrier layer individually has thickness in the range of 1 µm - 25 µm.

2. The multilayer barrier film as claimed in claim 1, wherein the at least one barrier layer individually has thickness in the range of 1 µm - 20 µm.

3. The multilayer barrier film as claimed in claim 1, further comprises at least one tie layer **(D)** having a thickness in the range of 2 µm - 40 µm;
wherein the at least one tie layer comprises polymeric adhesive selected from the group consisting of maleated polyethylene, anhydride grafted ethylene/1-butene copolymer, anhydride grafted ethylene/1-hexene copolymer, polypropylene, propylene ethylene copolymer, ethylene vinyl acetate copolymer, ethylene methyl acrylate copolymer, and anhydride grafted ethylene/1-octene copolymer.

4. The multilayer barrier film as claimed in claim 1, wherein the at least one polyolefin core layer (A) and the at least one polyolefin layer **(C)** is multilayer.

5. The multilayer barrier film as claimed in claim 1, wherein the at least one polyolefin core layer **(A)** comprises polymer having density in the range of 0.833 g/cm³ - 0.99 g/cm^{3;} and the at least one polyolefin layer **(C)** comprises polymer having density in the range of 0.833 g/cm³ - 0.990 g/cm³.

6. The multilayer barrier film as claimed in claim 1, wherein the at least one polyolefin core layer **(A)** has a thickness in the range of 1 µm - 100 µm; and the at least one polyolefin layer **(C)** has a thickness in the range of 3 µm - 100 µm.

7. The multilayer barrier film as claimed in claim 1, wherein the at least one barrier layer **(B)** further comprises a member selected from the group consisting of polyamides and polyethylene terephthalate.

8. The multilayer barrier film as claimed in claim 1, wherein the film has a thickness in the range of 20 µm - 400µm.

9. A process of preparing the multilayer barrier film as claimed in any one of the claims 1-8, wherein the film is prepared by a process selected from blown film process, cast film process, or lamination of blown or cast films.

10. A laminate comprising:
at least one print layer **(X);**
the multilayer barrier film as claimed in any one of the claims 1-8; and
optionally at least one sealant layer **(Y).**

11. The laminate as claimed in claim 10, wherein the at least one print layer comprises a polymer selected from high density polyethylene, medium density polyethylene, low density polyethylene, linear low-density polyethylene, polypropylene (PP), polypropylene copolymers, ethylene copolymers, and combinations thereof; and
the at least one sealant layer comprises a polymer selected from high density polyethylene, medium density polyethylene, low density polyethylene, linear low-density polyethylene, and combinations thereof.

12. The laminate as claimed in claim 10, wherein the at least one print layer has a thickness in the range of 50 µm - 200 µm, and
the at least one sealant layer has a thickness in the range of 50 µm - 200 µm.

13. The laminate as claimed in any one of the claims 10-12, wherein the laminate reduces the oxygen transmission rate (OTR) by at least 2 times in comparison to single barrier layer of about same thickness.

14. The laminate as claimed in any one of the claims 10-12, wherein the laminate has an oxygen transmission rate (OTR) equal to or less than 0.2 cm³/m²/ 1 day/1 atm, at a temperature in the range of 22 °C - 25 °C at relative humidity in the range of 0 - 90% RH.

15. An article comprising the multilayer barrier film as claimed in any one of the claims 1 - 8 or the laminate as claimed in any one of the claims 10-14.

16. Use of the multilayer barrier film as claimed in any one of the claims 1 - 8 or the laminate as claimed in any one of the claims 10-14 for a packaging material, wherein packaging material is a lamitube.

## Patentansprüche

1. Mehrschichtige Barrierefolie **(F),** umfassend:
(a) mindestens eine Polyolefin-Kernschicht **(A),** die aus Polyethylen hoher Dichte, Polyethylen mittlerer Dichte, Polyethylen niedriger Dichte und linearem Polyethylen niedriger Dichte ausgewählt ist;
(b) mindestens eine Barriereschicht **(B),** die Ethylen-Vinylalkohol umfasst, auf beiden der Seiten der Kernschicht; und
(c) mindestens eine Polyolefinschicht **(C),** angrenzend an die mindestens eine Barriereschicht,
wobei die mindestens eine Barriereschicht einzeln eine Dicke im Bereich von 1 um-25 µm aufweist.

2. Mehrschichtige Barrierefolie nach Anspruch 1, wobei die mindestens eine Barriereschicht einzeln eine Dicke im Bereich von 1 um-20 µm aufweist.

3. Mehrschichtige Barrierefolie nach Anspruch 1, die ferner mindestens eine Haftvermittlerschicht **(D)** umfasst, die eine Dicke im Bereich von 2 um-40 µm aufweist;
wobei die mindestens eine Haftvermittlerschicht einen polymeren Klebstoff umfasst, der aus der Gruppe bestehend aus Polyethylenmaleat, anhydridgepfropftem Ethylen/1-Buten-Copolymer, anhydridgepfropftem Ethylen/1-Hexen-Copolymer, Polypropylen, Propylen-Ethylen-Copolymer, Ethylen-Vinylacetat-Copolymer, Ethylen-Methylacrylat-Copolymer und anhydridgepfropftem Ethylen/1-Octen-Copolymer ausgewählt ist.

4. Mehrschichtige Barrierefolie nach Anspruch 1, wobei die mindestens eine Polyolefin-Kernschicht **(A)** und die mindestens eine Polyolefinschicht **(C)** mehrschichtig sind.

5. Mehrschichtige Barrierefolie nach Anspruch 1, wobei die mindestens eine Polyolefin-Kernschicht **(A)** ein Polymer umfasst, das eine Dichte im Bereich von 0,833 g/cm³-0,99 g/cm³ aufweist; und die mindestens eine Polyolefinschicht **(C)** ein Polymer umfasst, das eine Dichte im Bereich von 0,833 g/cm³-0,990 g/cm³ aufweist.

6. Mehrschichtige Barrierefolie nach Anspruch 1, wobei die mindestens eine Polyolefin-Kernschicht **(A)** eine Dicke im Bereich von 1 um-100 µm aufweist; und die mindestens eine Polyolefinschicht **(C)** eine Dicke im Bereich von 3 um-100 µm aufweist.

7. Mehrschichtige Barrierefolie nach Anspruch 1, wobei die mindestens eine Barriereschicht **(B)** ferner ein Element umfasst, das aus der Gruppe bestehend aus Polyamiden und Polyethylenterephthalat ausgewählt ist.

8. Mehrschichtige Barrierefolie nach Anspruch 1, wobei die Folie eine Dicke im Bereich von 20 µm-400 µm aufweist.

9. Verfahren zur Herstellung der mehrschichtigen Barrierefolie nach einem der Ansprüche 1 bis 8, wobei die Folie durch ein Verfahren hergestellt wird, das aus einem Blasfolienverfahren, einem Gießfolienverfahren oder einer Laminierung von Blas- oder Gießfolien hergestellt wird.

10. Laminat, umfassend:
mindestens eine Druckschicht **(X);**
die mehrschichtige Barrierefolie nach einem der Ansprüche 1 bis 8; und
optional mindestens eine Dichtmittelschicht **(Y).**

11. Laminat nach Anspruch 10, wobei die mindestens eine Druckschicht ein Polymer umfasst, das aus Polyethylen hoher Dichte, Polyethylen mittlerer Dichte, Polyethylen niedriger Dichte, linearem Polyethylen niedriger Dichte, Polypropylen (PP), Polypropylen-Copolymeren, Ethylen-Copolymeren und Kombinationen davon ausgewählt ist; und
mindestens eine Dichtmittelschicht ein Polymer umfasst, das aus Polyethylen hoher Dichte, Polyethylen mittlerer Dichte, Polyethylen niedriger Dichte, linearem Polyethylen niedriger Dichte und Kombinationen davon ausgewählt ist.

12. Laminat nach Anspruch 10, wobei die mindestens eine Druckschicht eine Dicke im Bereich von 50 um-200 µm aufweist, und
die mindestens eine Dichtmittelschicht eine Dicke im Bereich von 50 um-200 µm aufweist.

13. Laminat nach einem der Ansprüche 10 bis 12, wobei das Laminat die Sauerstoffübertragungsrate (OTR) im Vergleich zu einer einzigen Barriereschicht mit etwa derselben Dicke um mindestens das 2-fache verringert.

14. Laminat nach einem der Ansprüche 10 bis 12, wobei das Laminat eine Sauerstoffübertragungsrate (OTR), die gleich oder kleiner als 0,2 cm³/m²/1 Tag/1 atm ist, bei einer Temperatur im Bereich von 22°C-25°C bei einer relativen Luftfeuchtigkeit im Bereich von 0-90% RH aufweist.

15. Artikel, umfassend die mehrschichtige Barrierefolie nach einem der Ansprüche 1 bis 8 oder das Laminat nach einem der Ansprüche 10 bis 14.

16. Verwendung der mehrschichtigen Barrierefolie nach einem der Ansprüche 1 bis 8 oder des Laminats nach einem der Ansprüche 10 bis 14 für ein Verpackungsmaterial, wobei das Verpackungsmaterial eine Lamitube ist.

## Revendications

1. Film barrière multicouche (F) comprenant :
(a) au moins une couche de coeur en polyoléfine (A) choisie parmi un polyéthylène haute densité, un polyéthylène moyenne densité, un polyéthylène basse densité, et un polyéthylène basse densité linéaire ;
(b) au moins une couche de barrière (B) comprenant un éthylène-alcool vinylique sur les deux côtés de la couche de coeur ; et
(c) au moins une couche de polyoléfine (C) adjacente à l'au moins une couche de barrière,
dans lequel l'au moins une couche de barrière a individuellement une épaisseur située dans la plage allant de 1 µm à 25 µm.

2. Film barrière multicouche selon la revendication 1, dans lequel l'au moins une couche de barrière a individuellement une épaisseur située dans la plage allant de 1 µm à 20 µm.

3. Film barrière multicouche selon la revendication 1, comprenant en outre au moins une couche de liaison (D) ayant une épaisseur située dans la plage allant de 2 µm à 40 µm ;
dans lequel l'au moins une couche de liaison comprend un adhésif polymère choisi dans le groupe constitué par un polyéthylène maléaté, un copolymère d'éthylène/1-butène greffé d'anhydride, un copolymère d'éthylène/1-hexène greffé d'anhydride, un polypropylène, un copolymère de propylène-éthylène, un copolymère d'éthylène-acétate de vinyle, un copolymère d'éthylène-acrylate de méthyle, et un copolymère d'éthylène/1-octène greffé d'anhydride.

4. Film barrière multicouche selon la revendication 1, dans lequel l'au moins une couche de coeur en polyoléfine (A) et l'au moins une couche de polyoléfine (C) sont multicouches.

5. Film barrière multicouche selon la revendication 1, dans lequel l'au moins une couche de coeur en polyoléfine (A) comprend un polymère ayant une masse volumique située dans la plage allant de 0,833 g/cm³ à 0,99 g/cm³ et l'au moins une couche de polyoléfine (C) comprend un polymère ayant une masse volumique située dans la plage allant de 0,833 g/cm³ à 0, 990 g/cm³.

6. Film barrière multicouche selon la revendication 1, dans lequel l'au moins une couche de coeur en polyoléfine (A) a une épaisseur située dans la plage allant de 1 µm à 100 µm ; et l'au moins une couche de polyoléfine (C) a une épaisseur située dans la plage allant de 3 µm à 100 µm.

7. Film barrière multicouche selon la revendication 1, dans lequel l'au moins une couche de barrière (B) comprend en outre un membre choisi dans le groupe constitué par les polyamides et un poly(téréphtalate d'éthylène).

8. Film barrière multicouche selon la revendication 1, lequel film a une épaisseur située dans la plage allant de 20 µm à 400 µm.

9. Procédé de préparation du film barrière multicouche de l'une quelconque des revendications 1 à 8, dans lequel le film est préparé par un procédé choisi parmi un procédé de soufflage de film, un procédé de coulée de film, ou une stratification de films soufflés ou coulés.

10. Stratifié comprenant :
au moins une couche d'impression (X) ;
le film barrière multicouche de l'une quelconque des revendications 1 à 8 ; et
éventuellement au moins une couche d'étanchéité (Y) .

11. Stratifié selon la revendication 10, dans lequel l'au moins une couche d'impression comprend un polymère choisi parmi un polyéthylène haute densité, un polyéthylène moyenne densité, un polyéthylène basse densité, un polyéthylène basse densité linéaire, un polypropylène (PP), les copolymères de polypropylène, les copolymères d'éthylène, et leurs combinaisons ; et
l'au moins une couche d'étanchéité comprend un polymère choisi parmi un polyéthylène haute densité, un polyéthylène moyenne densité, un polyéthylène basse densité, un polyéthylène basse densité linéaire, et leurs combinaisons.

12. Stratifié selon la revendication 10, dans lequel l'au moins une couche d'impression a une épaisseur située dans la plage allant de 50 µm à 200 um, et
l'au moins une couche d'étanchéité a une épaisseur située dans la plage allant de 50 µm à 200 um.

13. Stratifié selon l'une quelconque des revendications 10 à 12, lequel stratifié réduit le taux de transmission d'oxygène (OTR) d'au moins 2 fois en comparaison avec une couche de barrière unique ayant à peu près la même épaisseur.

14. Stratifié selon l'une quelconque des revendications 10 à 12, lequel stratifié a un taux de transmission d'oxygène (OTR) égal ou inférieur à 0,2 cm³/m²/jour/atm, à une température située dans la plage allant de 22°C à 25°C sous une humidité relative HR située dans la plage allant de 0 à 90 %.

15. Article comprenant le film de barrière multicouche de l'une quelconque des revendications 1 à 8 ou le stratifié de l'une quelconque des revendications 10 à 14.

16. Utilisation du film de barrière multicouche de l'une quelconque des revendications 1 à 8 ou du stratifié de l'une quelconque des revendications 10 à 14 pour un matériau d'emballage, dans laquelle le matériau d'emballage est un tube stratifié.
